# EUROPEAN PATENT APPLICATION

(11) **EP 4 255 008 A1**
(43) Date of publication of application: **04.10.2023**
(21) Application number: 20963522.6
(22) Date of filing: 27.11.2020
(51) Int. Cl.: H04W 16/28, H04W 72/04, H04W 72/12

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2020/044174
(87) International publication number: WO 2022/113257

(57) **Abstract**

A terminal according to an aspect of the present disclosure includes: a receiving section that receives identification information related to a transmission/reception point associated with at least one of spatial relation information of an uplink control channel or an uplink control channel resource; and a control section that controls transmission of the uplink control channel based on the identification information when a spatial relation is configured or activated for the uplink control channel resource.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). Furthermore, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also called 5th generation mobile communication system (5G), 5G+ (plus), 6th generation mobile communication system (6G), New Radio (NR), or 3GPP Rel. 15 and subsequent releases) are also being studied.

In existing LTE systems (LTE Rel. 8 to 15), radio link quality is monitored (radio link monitoring (RLM)). When a radio link failure (RLF) is detected by RLM, re-establishment of radio resource control (RRC) connection is requested of the user terminal (user equipment (UE)).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In future radio communication systems (for example, NR), it has been studied to perform a procedure to detect a beam failure and switch to another beam (which may also be referred to as a beam failure recovery (BFR) procedure, BFR, link recovery procedures, and the like).

Further, in Rel. 17 NR and subsequent releases, it is also assumed that a terminal (UE) performs communication using a plurality of transmission/reception points (TRP)/UE panels. In this case, it is conceivable to perform beam failure detection in a plurality of TRPs/a plurality of UE panels, but how to control beam failure detection (BFD) or beam failure recovery (BFR) in each TRP/UE panel becomes a problem. If beam failure detection or beam failure recovery in each TRP/UE panel cannot be properly controlled, communication throughput may decrease or communication quality may deteriorate.

The present disclosure has been made in view of such a point, and an object of the present disclosure is to provide a terminal, a radio communication method, and a base station which enable appropriate beam failure detection or beam failure recovery even when a plurality of transmission/reception points are used.

### Solution to Problem

A terminal according to an aspect of the present disclosure includes: a receiving section that receives identification information related to a transmission/reception point associated with at least one of spatial relation information of an uplink control channel or an uplink control channel resource; and a control section that controls transmission of the uplink control channel based on the identification information when a spatial relation is configured or activated for the uplink control channel resource.

### Advantageous Effects of Invention

According to an aspect of the present disclosure, beam failure detection or beam failure recovery can be appropriately performed even when a plurality of transmission/reception points are used.

### Brief Description of Drawings

[FIG. 1] Fig. 1 is a diagram illustrating an example of a beam recovery procedure in Rel. 15 NR.
[FIG. 2] Fig. 2 is a diagram illustrating an example of a physical uplink control channel (PUCCH) resource set.
[FIG. 3] Figs. 3A to 3D illustrate one example of multi-TRPs.
[FIG. 4] Figs. 4A and 4B are diagrams illustrating an example of a medium access control-control element (MAC CE) configuration according to a first aspect.
[FIG. 5] Figs. 5A and 5B are diagrams illustrating an example of an MAC CE configuration according to a second aspect.
[FIG. 6] Fig. 6 is a diagram illustrating an example of a schematic configuration of a radio communication system according to one embodiment.
[FIG. 7] Fig. 7 is a diagram illustrating an example of a configuration of a base station according to one embodiment.
[FIG. 8] Fig. 8 is a diagram illustrating an example of a configuration of a user terminal according to one embodiment.
[FIG. 9] Fig. 9 is a diagram illustrating an example of a hardware configuration of the base station and the user terminal according to one embodiment.

### Description of Embodiments

### (Beam Failure Detection)

In NR, communication is performed using beam forming. For example, a UE and a base station (for example, gNodeB (gNB)) may use a beam used for signal transmission (which is also referred to as a transmission beam, a Tx beam, or the like) or a beam used for signal reception (which is also referred to as a reception beam, an Rx beam, or the like).

When beam forming is used, degradation of radio link quality is assumed because it becomes susceptible to interference by an obstacle. A radio link failure (RLF) may frequently occur due to degradation of the radio link quality. When the RLF occurs, cell re-connection is required, and thus frequent occurrence of the RLF leads to degradation of system throughput.

In the NR, to suppress the occurrence of the RLF, a procedure of switching to another beam (which may also be referred to as beam recovery (BR), beam failure recovery (BFR), Layer 1/Layer 2 (L1/L2) beam recovery, or the like) is performed when quality of a specific beam is degraded. Note that the BFR procedure may be simply referred to as BFR.

Note that a beam failure (BF) in the present disclosure may also be referred to as a link failure.

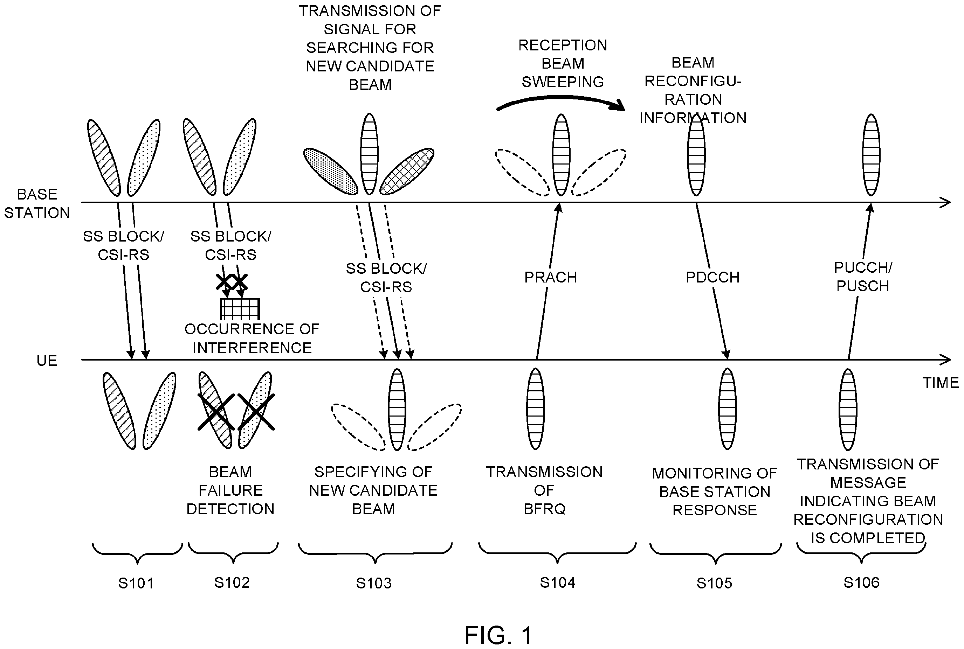

Fig. 1 is a diagram illustrating an example of a beam recovery procedure in Rel. 15 NR. The number of beams, or the like, is an example, and is not limited thereto. In an initial state (step S101) in Fig. 1, the UE performs measurement based on a reference signal (RS) resource transmitted using two beams.

The RS may be at least one of a synchronization signal block (SSB) or a channel state information RS (CSI-RS). Note that the SSB may also be referred to as an SS/physical broadcast channel (PBCH) block, or the like.

The RS may be at least one of a primary synchronization signal (primary SS (PSS)), a secondary synchronization signal (secondary SS (SSS)), a mobility reference signal (mobility RS (MRS)), a signal included in an SSB, the SSB, a CSI-RS, a demodulation reference signal (DMRS), a beam-specific signal, or the like, or a signal configured by extending or changing these. The RS measured in step S101 may be referred to as an RS for beam failure detection (beam failure detection RS (BFD-RS)), an RS (BFR-RS) for use in the beam recovery procedure, or the like.

In step S102, interference in radio waves from the base station occurs, whereby the UE cannot detect the BFD-RS (or reception quality of the RS is degraded). Such interference may occur due to, for example, an effect of an obstacle between the UE and the base station, fading, interference, or the like.

Once a given condition is satisfied, the UE detects a beam failure. For example, the UE may detect occurrence of a beam failure when a block error rate (BLER) is less than a threshold value for all of configured BFD-RSs (BFD-RS resource configurations). When the occurrence of the beam failure is detected, a lower layer (physical (PHY) layer) of the UE may perform notification (indication) of a beam failure instance to a higher layer (MAC layer).

Note that a criterion for determination is not limited to the BLER, and may be reference signal received power in a physical layer (Layer 1 reference signal received power (L1-RSRP)). Further, instead of RS measurement or in addition to RS measurement, beam failure detection may be performed based on a downlink control channel (physical downlink control channel (PDCCH)) or the like. The BFD-RS may be expected to be in a quasi-co-location (QCL) with a DMRS of the PDCCH monitored by the UE.

Here, the QCL is an indicator indicating a statistical property of a channel. For example, a case where one signal/channel and another signal/channel have a QCL relation may mean that it is possible to assume that at least one of Doppler shift, Doppler spread, an average delay, a delay spread, and a spatial parameter (for example, a spatial Rx parameter) is identical (in QCL with at least one of these) between a plurality of these different signals/channels.

Note that the spatial Rx parameter may correspond to a reception beam of the UE (for example, a reception analog beam), and the beam may be specified based on spatial QCL. The QCL (or at least one element of the QCL) in the present disclosure may be replaced with spatial QCL (sQCL).

Information regarding the BFD-RS (for example, an RS index, resource, number, number of ports, precoding, or the like), information regarding beam failure detection (BFD) (for example, the above-described threshold value), or the like may be configured in (notified to) the UE by using higher layer signaling, or the like. The information regarding the BFD-RS may also be referred to as information regarding a resource for BFR, or the like.

In the present disclosure, higher layer signaling may be, for example, any of radio resource control (RRC) signaling, medium access control (MAC) signaling, broadcast information, and the like, or a combination thereof.

For example, a medium access control-control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The higher layer (for example, the MAC layer) of the UE may start a given timer (which may also be referred to as a beam failure detection timer) when receiving a beam failure instance notification from the PHY layer of the UE. The MAC layer of the UE may trigger BFR (for example, start any one of random access procedures to be described later) after receiving the beam failure instance notification a given number of times (for example, beamFailureInstanceMaxCount configured by RRC) or more before the timer expires.

The base station may determine that the UE has detected a beam failure when there is no notification from the UE or when a given signal (beam recovery request in step S104) is received from the UE.

In step S103, the UE starts a search for a new candidate beam to be newly used for communication for beam recovery. The UE may measure a given RS to select a new candidate beam corresponding to the RS. The RS measured in step S103 may be referred to as, for example, a new candidate RS, a new candidate beam identification RS (NCBI-RS), CBI-RS, and a candidate beam RS (CB-RS). The NCBI-RS may be the same as or different from the BFD-RS. Note that the new candidate beam may be simply referred to as a candidate beam, or a candidate RS.

The UE may determine a beam corresponding to an RS that satisfies a given condition as a new candidate beam. The UE may determine a new candidate beam based on, for example, an RS whose L1-RSRP exceeds a threshold value among configured NCBI-RSs. Note that a criterion for determination is not limited to L1-RSRP. L1-RSRP regarding an SSB may also be referred to as SS-RSRP. L1-RSRP regarding a CSI-RS may also be referred to as CSI-RSRP.

Information regarding an NCBI-RS (for example, an RS resource, number, number of ports, precoding, or the like), information regarding new candidate beam identification (NCBI) (for example, the above-described threshold value), or the like may be configured in (notified) the UE using higher layer signaling, or the like. Information regarding the new candidate RS (or NCBI-RS) may be acquired based on the information regarding the BFD-RS. Information regarding the NCBI-RS may also be referred to as information regarding an NBCI resource or the like.

Note that the BFD-RS, NCBI-RS, or the like may be replaced with a radio link monitoring reference signal (RLM-RS).

In step S104, the UE that has specified the new candidate beam transmits a beam recovery request (beam failure recovery request (BFRQ)). The beam failure recovery request may also be referred to as a beam recovery request signal, a beam failure recovery request signal, or the like.

The BFRQ may be transmitted using, for example, at least one of a physical uplink control channel (PUCCH), a physical random access channel (PRACH), a physical uplink shared channel (PUSCH), or a configured grant (CG) PUSCH.

The BFRQ may include information regarding the new candidate beam or new candidate RS specified in step S103. The resource for the BFRQ may be associated with the new candidate beam. Beam information may be reported by using, for example, a beam index (BI), a port index of a given reference signal, an RS index, a resource index (for example, CSI-RS resource indicator (CRI), SSB resource indicator (SSBRI)), or the like.

In Rel. 15 NR, contention-based BFR (CB-BFR) that is BFR based on a contention-based random access (RA) procedure and contention-free BFR (CF-BFR) that is BFR based on a non-contention based random access procedure have been studied. In the CB-BFR or the CF-BFR, the UE may transmit a preamble (which is also referred to as an RA preamble, a physical random access channel (PRACH), an RACH preamble, or the like) as the BFRQ by using a PRACH resource.

In the CB-BFR, the UE may transmit a preamble randomly selected from one or more preambles. Meanwhile, in the CF-BFR, the UE may transmit a preamble uniquely allocated to the UE from the base station. In the CB-BFR, the base station may allocate an identical preamble to a plurality of UEs. In the CF-BFR, the base station may allocate preambles individually to the UEs.

Note that the CB-BFR and the CF-BFR may also be referred to as CB PRACH-based BFR (contention-based PRACH-based BFR (CBRA-BFR)) and CF PRACH-free BFR (contention-free PRACH-based BFR (CFRA-BFR)), respectively. The CBRA-BFR may also be referred to as CBRA for BFR. The CFRA-BFR may also be referred to as CFRA for BFR.

In either the CB-BFR or the CF-BFR, the information regarding the PRACH resource (RA preamble) may be reported by, for example, higher layer signaling (RRC signaling and the like). For example, the information may include information indicating a correspondence relationship between the detected DL-RS (beam) and the PRACH resource, and different PRACH resources may be associated with each DL-RS.

In step S105, the base station that has detected the BFRQ transmits a response signal (which may also be referred to as a gNB response or the like) for the BFRQ from the UE. The response signal may include reconfiguration information (for example, DL-RS resource configuration information) for one or more beams.

The response signal may be transmitted in, for example, a UE common search space of PDCCH. The response signal may be reported by using PDCCH (DCI) scrambled in cyclic redundancy check (CRC) by an identifier of the UE (for example, cell-radio RNTI (C-RNTI)). The UE may determine at least one of a transmission beam or a reception beam to be used, based on beam reconfiguration information.

The UE may monitor the response signal based on at least one of a control resource set (CORESET) for BFR or a search space set for BFR.

For the CB-BFR, contention resolution may be determined to be successful when the UE receives a PDCCH corresponding to the C-RNTI regarding the UE itself.

Regarding the processing of step S105, a period for the UE to monitor a response from the base station (for example, gNB) to the BFRQ may be configured. The period may be referred to as, for example, a gNB response window, a gNB window, a beam recovery request response window, or the like. The UE may retransmit the BFRQ when no gNB response is detected within the window period.

In step S106, the UE may transmit a message indicating that beam reconfiguration is completed to the base station. The message may be transmitted by the PUCCH or PUSCH, for example.

Beam recovery success (BR success) may represent a case where the processing reaches step S106, for example. On the other hand, beam recovery failure (BR failure) may correspond to, for example, a case where the number of times of BFRQ transmission has reached a given number, or a beam-failure-recovery-timer has expired.

Rel. 15 supports performing the beam recovery procedure (for example, notification of BFRQ) for a beam failure detected by an SpCell (PCell/PSCell) using a random access procedure. On the other hand, Rel. 16 supports performing the beam recovery procedure (for example, notification of BFRQ) for the beam failure detected by the SCell using at least one of PUCCH (for example, a scheduling request (SR)) transmission for BFR or MAC CE (for example, UL-SCH) transmission for BFR.

For example, the UE may use MAC CE-based two steps to transmit information regarding the beam failure. The information regarding the beam failure may include information regarding a cell in which the beam failure is detected, and information regarding a new candidate beam (or a new candidate RS index).

### [Step 1]

When a BF is detected, a PUCCH-BFR (scheduling request (SR)) may be transmitted from the UE to the PCell/PSCell. Then, a UL grant (DCI) for the following Step 2 may be transmitted from the PCell/PSCell to the UE. When a beam failure is detected and there is an MAC CE (or UL-SCH) for transmitting information regarding the new candidate beam, Step 1 (for example, PUCCH transmission) may be omitted and Step 2 (for example, MAC CE transmission) may be performed.

### [Step 2]

Then, the UE may transmit information (for example, a cell index) regarding the cell in which the beam failure is detected (failed) and information regarding the new candidate beam to the base station (PCell/PSCell) through an uplink channel (for example, the PUSCH) using the MAC CE. Thereafter, after a given period (for example, 28 symbols) from reception of the response signal from the base station through the BFR procedure, the QCL of the PDCCH/PUCCH/PDSCH/PUSCH may be updated to a new beam.

Note that numbers of these steps are merely numbers for description, and a plurality of these steps may be combined, or the order of these steps may be changed. Further, whether or not to perform BFR may be configured in the UE by using higher layer signaling.

### (Spatial Relation Information)

In the NR, the UE controls transmission processing (for example, at least one of transmission, mapping, precoding, modulation, or coding) of at least one of an uplink signal or a channel (also referred to as a signal/channel) based on a given spatial relation.

A spatial relation applied to a given signal/channel may be specified by spatial relation information (SRI) reported (configured) using higher layer signaling.

Note that in the present disclosure, the higher layer signaling may be, for example, any one of radio resource control (RRC) signaling, medium access control (MAC) signaling, broadcast information, or a combination thereof.

For example, a MAC Control Element (MAC CE), a MAC Protocol Data Unit (PDU), or the like may be used for the MAC signaling. The broadcast information may be, for example, a master information block (MIB), a system information block (SIB), remaining minimum system information (RMSI), other system information (OSI), or the like.

For example, in Rel-15 NR, spatial relation information ("PUCCH-SpatialRelationInfo" information element of RRC) between a given reference signal (RS) and an uplink control channel (physical uplink control channel (PUCCH)) may be included in PUCCH configuration information ("PUCCH-Config" information element of RRC) and configured in the UE.

The given reference signal may be, for example, at least one of a synchronization signal block (SSB), a channel state information reference signal (CSI-RS), or a sounding reference signal (SRS).

The configured SRI may include an SRI identifier (ID) for identifying the SRI. The configured SRI may include at least one of an SSB index, a CSI-RS resource ID, or an SRS resource ID, as an index of the given RS. Further, the SRI may include a serving cell index, a bandwidth part (BWP) ID, and the like corresponding to the given RS.

In the present disclosure, the index, the ID, the indicator, the resource ID, and the like may be replaced with one another.

When the spatial relation information related to the SSB or the CSI-RS and the PUCCH is configured, the UE may transmit the PUCCH by using a spatial domain filter that is the same as a spatial domain filter for receiving the SSB or CSI-RS. That is, in this case, the UE may assume that a UE reception beam of the SSB or CSI-RS and a UE Tx beam of the PUCCH are the same.

When the spatial relation information related to the SRS and the PUCCH is configured, the UE may transmit the PUCCH by using a spatial domain filter that is the same as a spatial domain filter for transmitting the SRS. That is, in this case, the UE may assume that the UE transmission beam of the SRS and the UE Tx beam of the PUCCH are the same.

Note that a spatial domain filter for transmission of a base station, a downlink spatial domain transmission filter, and a Tx beam of the base station may be replaced with one another. A spatial domain filter for reception of the base station, an uplink spatial domain receive filter, and a reception beam of the base station may be replaced with one another.

Further, a spatial domain filter for transmission of the UE, an uplink spatial domain transmission filter, and a Tx beam of the UE may be replaced with one another. A spatial domain filter for reception of the UE, a downlink spatial domain receive filter, and a reception beam of the UE may be replaced with one another.

The UE may configure the SRI in units of PUCCH configurations (PUCCH-Config). The SRI configured by the PUCCH configuration may be applied to all PUCCH resources configured by the PUCCH configuration.

When more than one SRI regarding the PUCCH is configured, the UE may perform control in such a way that one PUCCH SRI is active with respect to one PUCCH resource at a given time, based on a PUCCH spatial relation activation/deactivation MAC CE.

### (PUCCH Resource)

In an existing radio communication system (for example, Rel. 15), a PUCCH resource used for transmission of HARQ-ACK for DL transmission (for example, a PDSCH) is determined based on information reported by each of DCI and higher layer signaling.

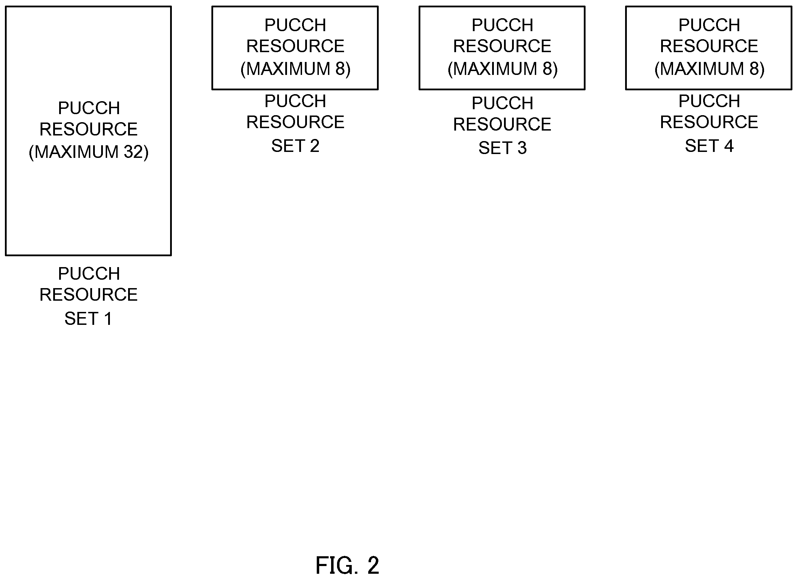

One or more PUCCH resource sets may be reported to (or configured for) the UE by higher layer signaling. The PUCCH resource set may include one or more PUCCH resources. For example, K (for example, 1 ≤ K ≤ 4) PUCCH resource sets may be reported from the base station to the UE. Each PUCCH resource set may include M (for example, 8 ≤ M ≤ 32, or 1 ≤ M ≤ 8) PUCCH resources (see Fig. 2).

For example, a PUCCH resource set 1 includes a maximum of 32 PUCCH resources, and PUCCH resource sets 2 to 4 may be configured to each include a maximum of eight PUCCH resources. In this example, a maximum of 128 PUCCH resources are configured. A single PUCCH spatial relation information (single PUCCH spatial relation info) may be activated for each PUCCH resource.

The user terminal may determine a single PUCCH resource set from the K configured PUCCH resource sets based on a payload size (for example, a payload size of UCI (UCI payload size)). The UE may determine a PUCCH resource to be used in transmission of UCI based on at least one of DCI or implicit information (implicit indication information, an implicit index, or the like) among the M PUCCH resources included in the determined PUCCH resource set.

### (Multi-TRPs)

In NR, it is considered that one or a plurality of transmission/reception points (TRPs) (multi-TRPs) perform DL transmission to UE by using one or a plurality of panels (multi-panels). Furthermore, it is considered that the UE performs UL transmission to one or a plurality of TRPs.

Note that the plurality of TRPs may correspond to the same cell identifier (ID) or may correspond to different cell IDs. The cell ID may be a physical cell ID or a virtual cell ID.

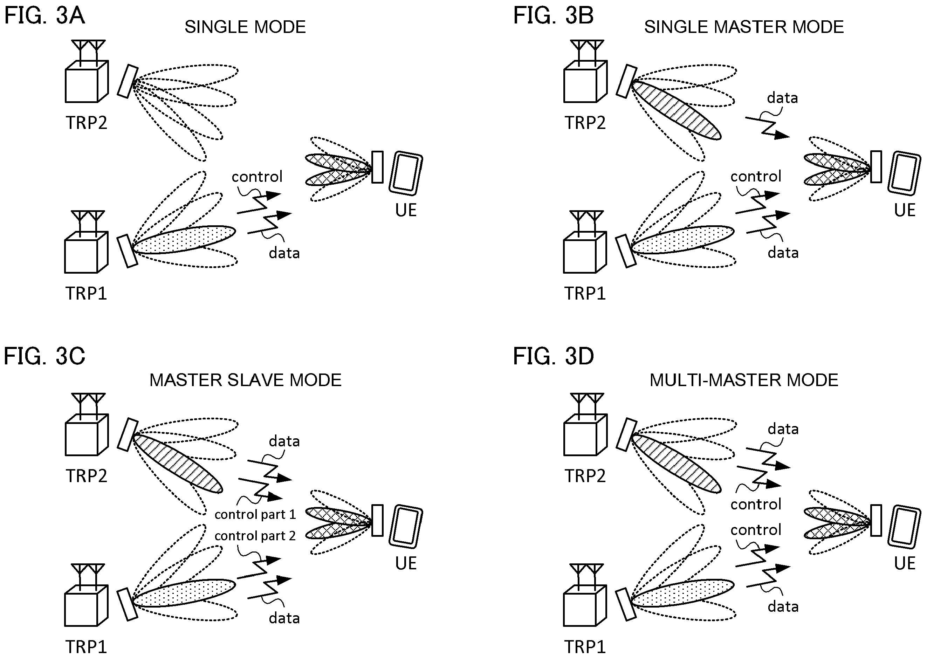

Figs. 3A to 3D are diagrams illustrating an example of a multi-TRP scenario. In these examples, it is assumed that each TRP is capable of transmitting four different beams, but is not limited to this.

Fig. 3A illustrates one example of a case where only one TRP (TRP1 in this example) of multi-TRPs performs transmission to a UE (which may be called a single mode, a single TRP, and the like). In this case, the TRP1 transmits both a control signal (PDCCH) and a data signal (PDSCH) to the UE.

Fig. 3B illustrates one example of a case where only one TRP (the TRP1 in this example) of the multi-TRPs transmits a control signal to the UE and the corresponding multi-TRPs transmit a data signal (which may be called a single master mode). The UE receives each PDSCH transmitted from the multi-TRPs based on one downlink control information (DCI).

Fig. 3C illustrates an example of a case where each of the multi-TRPs transmits a part of a control signal to the UE and the corresponding multi-TRPs transmit a data signal (which may be called a master slave mode). The TRP1 may transmit part 1 of a control signal (DCI), and the TRP2 may transmit part 2 of the control signal (DCI). Part 2 of the control signal may depend on part 1. The UE receives each PDSCH transmitted from the multi-TRPs based on these parts of the DCI.

Fig. 3D illustrates one example of a case where each of the multi-TRPs transmits separate control signals to the UE and the corresponding multi-TRPs transmit a data signal (which may be called a multi-master mode). A first control signal (DCI) may be transmitted from the TRP1, and a second control signal (DCI) may be transmitted from the TRP2. The UE receives each PDSCH transmitted from the corresponding multi-TRPs based on these DCIs.

When a plurality of PDSCHs (which may be referred to as multiple PDSCHs (multi-PDSCHs)) from the multi-TRPs as illustrated in Fig. 3B are scheduled by using one DCI, the corresponding DCI may be referred to as single DCI (S-DCI or single PDCCH). When each of a plurality of PDSCHs from the multi-TRPs as illustrated in Fig. 3D is scheduled by using a plurality of DCIs, the plurality of DCIs may be called multi-DCI (M-DCI or multiple PDCCHs (multi-PDCCHs)).

A different codeword (CW) and a different layer may be transmitted from each TRP of the multi-TRPs. As one form of multi-TRP transmission, non-coherent joint transmission (NCJT) is considered.

In the NCJT, for example, the TRP1 performs modulation mapping and layer mapping on a first codeword and transmits a first PDSCH by using first precoding in a first number of layers (for example, two layers). Furthermore, the TRP2 performs modulation mapping and layer mapping on a second codeword and transmits a second PDSCH by using second precoding in a second number of layers (for example, two layers).

Note that a plurality of PDSCHs (multiple PDSCHs) subjected to NCJT may be defined as partially or completely overlapping with respect to at least one of a time domain or a frequency domain. That is, the first PDSCH from a first TRP and the second PDSCH from a second TRP may overlap with respect to at least one of a time resource or a frequency resource.

The first PDSCH and the second PDSCH may be assumed not to be in a quasi-co-location (QCL) relationship (not to be quasi-co-located) . Reception of the multiple PDSCHs is interchangeable with the simultaneous reception of PDSCHs that are not of a given QCL type (for example, QCL type D) .

In URLLC for the multi-TRPs, support of PDSCH (transport block (TB) or codeword (CW)) repetition across the multi-TRPs has been studied. Support for repetition methods (URLLC schemes, for example, Schemes 1, 2a, 2b, 3, and 4) across the multi-TRPs on a frequency domain, a layer (spatial) domain, or a time domain has been studied. In Scheme 1, multiple PDSCHs from the multi-TRPs are subjected to space division multiplexing (SDM). In Schemes 2a and 2b, PDSCHs from the multi-TRPs are subjected to frequency division multiplexing (FDM). In Scheme 2a, the redundancy version (RV) is the same for the multi-TRPs. In Scheme 2b, the RVs may be the same or different for the multi-TRPs. In Schemes 3 and 4, the multiple PDSCHs from the multi-TRPs are subjected to time division multiplexing (TDM). In Scheme 3, the multiple PDSCHs from the multi-TRPs are transmitted in one slot. In Scheme 4, the multiple PDSCHs from the multi-TRPs are transmitted in different slots.

Such a multi-TRP scenario can perform more flexible transmission control using a high-quality channel.

The NCJT with multiple TRPs/panels may use a high rank. Both single DCI (single PDCCH, e.g., Fig. 3B) and multi-DCI (multi-PDCCHs, e.g., Fig. 3D) may be supported to support ideal and non-ideal backhaul among the plurality of TRPs. For both the single DCI and the multi-DCI, the maximum number of TRPs may be two.

Extension of TCI has been considered for single PDCCH designs (mainly for ideal backhaul). Each TCI code point in the DCI may correspond to one or two TCI states. A TCI field size may be the same as that in Rel. 15.

Meanwhile, in a future radio communication system (for example, Rel. 17 and subsequent releases), beam management of a UE having a plurality of panels (multi-panels) or extension of beam management using a plurality of transmission/reception points (multi-transmission/reception points (TRP)) has been studied.

When a terminal (UE) performs communication using a plurality of transmission/reception points (TRP)/UE panels, it is also conceivable to perform beam failure detection for each TRP/UE panel. However, there are insufficient considerations as to how to control the beam failure detection (BFD) or beam failure recovery (BFR) procedure in each TRP/UE panel.

For example, in the BFR procedure, the UE that has reported information such as a beam failure/new candidate RS performs subsequent transmission/reception processing (for example, QCL assumption/spatial relation assumption/UL power control) based on the response (for example, base station response/gNB response) from the base station.

In the BFR procedure of Rel. 15, the UE transmits the PRACH when a radio link failure is detected in the PCell/PSCell. The base station response may be a response signal (for example, PDCCH transmission) to the PRACH (for example, the PRACH for BFR) reported from the UE. The PDCCH may be transmitted by using a search space set configured by higher layer signaling (for example, recoverySearchSpaceId). The UE operation after the base station response may be PUCCH transmission/PDCCH monitoring based on a given condition.

For example, when the base station response (for example, PDCCH) is received, the UE may perform control to transmit the PUCCH using the same spatial filter as the last PRACH transmission in the same cell as the PRACH transmission. Furthermore, the transmit power of the PUCCH may be controlled based on a given parameter (for example, a new candidate beam/q_{new}). These given conditions (for example, spatial filter/transmit power) may be applied 28 symbols after the last symbol of the initially received base station response (for example, PDCCH) until an activation command of PUCCH spatial relation information (for example, PUCCH-SpatialRelationInfo) is received or until PUCCH spatial relation information (for example, PUCCH-SpatialRelationInfo) of a PUCCH resource is provided.

Further, when the base station response (for example, PDCCH) is received, the UE may assume the same antenna port quasi-co-location parameter as that associated with the given index (for example, q_{new}) for PDCCH monitoring in the control resource set with the given index (for example, index 0) after the given period. The given period of time may be after 28 symbols from the last symbol of the base station response (for example, PDCCH) initially received by the UE.

In the BFR procedure of Rel. 16, when the radio link quality in the SCell becomes worse than a given value, the UE may transmit the corresponding SCell index, information (for example, q_{new}) regarding the new candidate beam, and the like using a PUSCH MAC CE (for example, the first PUSCH/1^{st} PUSCH MAC CE). The base station response may be a response signal (for example, PDCCH transmission) to an MAC CE (for example, the initial PUSCH) reported from the UE. The PDCCH may be applied to a DCI format that schedules a PUSCH transmission with the same HARQ process number as the transmission of the initial PUSCH and a toggled NDI field value. The UE operation after the base station response may be PUCCH transmission/PDCCH monitoring based on a given condition.

For example, when the base station response (for example, PDCCH) is received, the UE may monitor the PDCCH in all the control resource sets in the SCell indicated by the MAC CE. In this case, the UE may monitor the PDCCH using the same antenna port quasi-co-location parameter as the corresponding index (for example, q_{new}).

Further, when the base station response (for example, PDCCH) is received and a given condition is satisfied, the UE may control transmission of the PUCCH using the same spatial domain filter as that corresponding to q_{new} for periodic CSI-RS or SS/PBCH block reception in the PUCCH Cell. In this case, the transmit power of the PUCCH may be controlled based on a given parameter (for example, a new candidate beam/q_{new}).

The given condition may be, for example, at least one or all of a condition that the spatial relation information (for example, a given higher layer parameter (for example, PUCCH-SpatialRelationInfo) for the PUCCH) for the PUCCH is provided (condition 1), a condition that the PUCCH having a link recovery request (LRR) is not transmitted or is transmitted by the PCell/PSCell (condition 2), and a condition that the PUCCH SCell is included in the SCell indicated by the MAC CE (condition 3).

As described above, the BFR procedure is supported in the existing system (for example, Rel. 15/Rel. 16), but when the UE performs communication using a plurality of TRPs/UE panels, how to control the BFD/BFR procedure in each TRP/UE panel becomes a problem.

For example, when a UE operation (for example, a UE operation for a PUCCH after the base station response) is applied to different TRPs with different conditions, how the UE determines the association/correspondence between the PUCCH and the TRP becomes problematic. If the beam failure recovery procedure (or the radio link recovery procedure) in each TRP/UE panel cannot be appropriately controlled, communication throughput may decrease or communication quality may deteriorate.

The present inventors have focused on a case where a beam failure recovery procedure (beam failure detection/beam failure recovery request/UE operation based on beam failure recovery) is applied in units of one or more TRPs/panels, studied a method of appropriately controlling the beam failure recovery procedure in units of TRPs/panels, and conceived the present embodiment.

Hereinafter, embodiments according to the present disclosure will be described in detail with reference to the drawings. The respective aspects may be applied individually or in combination.

In the present disclosure, the UE may be a UE that performs transmission and reception with a TRP using a plurality of panels. Each panel may correspond to a different TRP, one panel may correspond to a plurality of TRPs, or a plurality of panels may correspond to one TRP.

In the present disclosure, a UE panel (or panel index) may correspond to a specific group. In this case, the UE may assume that a beam/RS of each group is measured in each UE panel. The UE may assume that beams of a plurality of groups are simultaneously received (using different panels).

In the present disclosure, the TRP may be replaced with a panel of a TRP (or a base station), an RS group, an antenna port group, a spatial relation group, a QCL group, a TCI state, a TCI state group, a CORESET group, a CORESET pool, or the like. Further, a TRP index may be replaced with an RS group index, an antenna port group index, a QCL group index, a TCI state index, a TCI state group index, a CORESET group index, a CORESET pool index, or the like.

In the present disclosure, when a single DCI is applied, an n-th TRP (n is an arbitrary integer (for example, 1 or 2)) may correspond to an n-th TCI state and an n-th code division multiplexing (CDM) group.

In the present disclosure, when multiple DCI are applied, a first TRP may correspond to a CORESET without CORESETPoolIndex or a CORESET with CORESETPoolIndex = 0. A second TRP may correspond to a CORESET with CORESETPoolIndex = 1. When multiple DCI are applied, the CORESET pool index may be configured.

In the present disclosure, the UE panel may be replaced with an RS group, an antenna port group, a spatial relation group, a QCL group, a TCI state group, a CORESET group, or the like.

In the present disclosure, a panel may be associated with a group index of an SSB/CSI-RS group. Further, in the present disclosure, a panel may be associated with a TRP. In addition, in the present disclosure, a plurality of panels may be associated with a group index of group beam-based reporting. Further, in the present disclosure, a panel may be associated with a group index of an SSB/CSI-RS group for group beam-based reporting.

In the present disclosure, the serving cell/cell may be replaced with a PCell, a PSCell, or an SCell. In the following description, a case where two TRPs correspond to the serving cell will be described as an example, but three or more TRPs may correspond to the serving cell.

In the present disclosure, a BFD RS for which a beam failure is detected, a failed BFD RS, a TRP for which a beam failure is detected, a failed TRP, a UE panel for which a beam failure is detected, and a failed UE panel may be replaced with one another.

In the present disclosure, A/B may indicate at least one of A or B. In the present disclosure, A/B/ may indicate at least one of A, B, or C.

In the following description, the BFR procedure in a case of using one or more transmission/reception points will be described as an example, but the present embodiment can also be applied to communication control other than the BFR procedure.

### (First Aspect)

In a first aspect, a case where, when one or more TRPs are used, a UE operation (for example, PUCCH transmission) in each TRP is controlled based on a given ID associated with PUCCH spatial relation information (for example, PUCCH-SpatialRelationInfo) will be described.

In the present specification, the PUCCH spatial relation information may be replaced with a TCI state for UL, a unified UL TCI state, or a unified joint DL/UL TCI state. In the present specification, the given ID may be, for example, information used for identifying a TRP (for example, identification information regarding the TRP), and may be replaced with a TRP-ID, a group ID, or a new ID.

The network (for example, a base station) may notify/configure a UE with a given ID (hereinafter, also referred to as TRP identification information). For example, the base station may notify the UE of the TRP identification information by using higher layer signaling (or a higher layer parameter)/DCI.

The TRP identification information may be configured/defined (or correspondingly) in association with the PUCCH spatial relation information. When a plurality of PUCCH space-related information are configured for the UE, each PUCCH space-related information may be respectively associated with a given TRP identification information.

When a plurality of PUCCH space-related information are configured for the UE by higher layer parameters, TRP identification information may be configured for each PUCCH space-related information (for example, each PUCCH space-related information ID). Further, the PUCCH space-related information may be associated with a PUCCH resource used for PUCCH transmission.

For example, a plurality of PUCCH space-related information may be configured to correspond to a given PUCCH resource (for example, a PUCCH resource ID #x). In such a case, a given number (for example, one) of PUCCH space-related information may be simultaneously activated for the PUCCH resource. In other words, the number of PUCCH space-related information that are simultaneously activated for the PUCCH resource may be limited to a given number (for example, one).

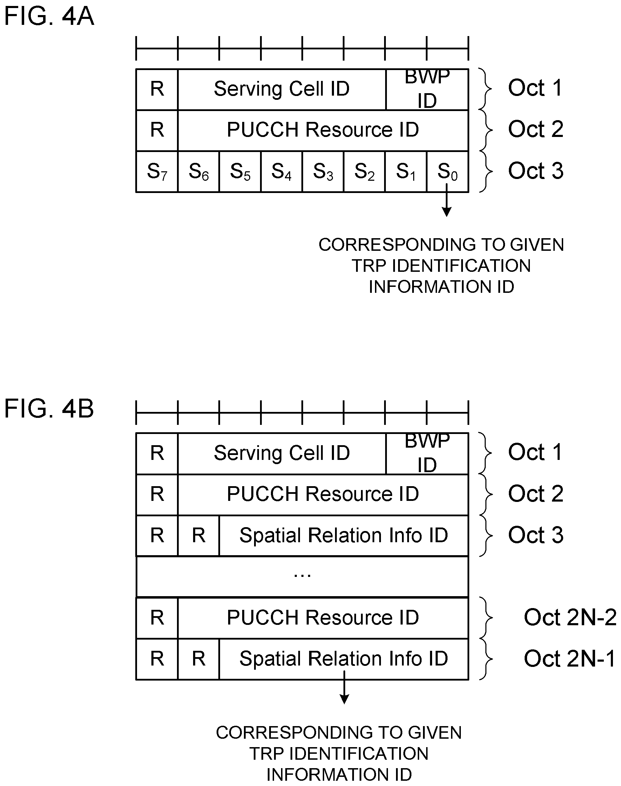

The PUCCH space-related information to be activated may be reported to the UE by using the MAC CE (see Figs. 4A and 4B). The MAC CE may be referred to as a PUCCH spatial relation activation/deactivation MAC CE.

Figs. 4A and 4B are diagrams illustrating an example of the PUCCH spatial relation activation/deactivation MAC CE. In this example, a bit string constituting the MAC CE is indicated, and is expressed by a plurality of octets (oct) (1 octet = 8 bits).

The MAC CE illustrated in Fig. 4A may include information such as an application target serving cell ID ("Serving Cell ID" field), a BWP ID ("BWP ID" field), and a PUCCH resource ID ("PUCCH Resource ID" field).

Furthermore, the MAC CE includes a field of "Sᵢ" (i = 0 to 7). When a given field of Sᵢ indicates 1, the UE activates SRI of a spatial relation information ID (hereinafter, also referred to as an SRI ID) #i+1. When a given field of Sᵢ indicates 0, the UE may deactivate the SRI of the SRI ID #i+1. For a given PUCCH resource, only one PUCCH SRI can be activated. Further, each SRI ID may be configured in association with given TRP identification information.

The field of "R" illustrated in Fig. 4A may mean a reserved bit for future extension.

Fig. 4B is different from Fig. 4A in that a plurality of PUCCH resource IDs can be included and that one or a plurality of spatial relation information ("Spatial Relation Info ID" field) indicating SRI IDs can be included. The SRI ID field may be simply referred to as an SRI field.

In the configuration of Fig. 4B, when a designated PUCCH resource ID is configured as a part of a PUCCH group (also referred to as a PUCCH resource group), there may be a constraint that other PUCCH resources in the same PUCCH group are not designated as the PUCCH resource ID in the same MAC CE. That is, the MAC CE is applied to all the PUCCH resources in the PUCCH group. In other words, the same SRI may be used for transmission of the PUCCH resources included in the PUCCH group.

The UE can determine, based on the MAC CE, PUCCH space-related information to be activated for a given PUCCH resource and TRP identification information related to the PUCCH space-related information.

When performing PUCCH transmission using the PUCCH resource (for example, when the PUCCH resource is designated by the DCI), the UE may control the PUCCH transmission based on PUCCH space-related information related to the PUCCH resource and TRP identification information related to the PUCCH space-related information.

In the BFR procedure (for example, a UE operation after reception of the base station response (for example, PUCCH transmission)), the UE may control PUCCH transmission (for example, the spatial filter/the transmit power of the PUCCH to be applied) in each TRP based on the TRP identification information. In this manner, the UE may determine a TRP to which the UE operation after reception of the base station response is applied based on the TRP identification information. As a result, even when communication is performed using a plurality of TRPs, the BFR procedure can be appropriately controlled for each TRP.

The TRP identification information (or a new ID) may be associated with information regarding another TRP. The information regarding another TRP may be at least one of a control resource set index, a control resource set pool index (for example, CORESETPoolIndex for the multi-DCI-based multi-TRPs), a beam failure detection RS ID, a beam failure detection RS set ID (for example, a BFD RS set ID), a new candidate beam RS ID, or a new candidate beam RS set ID (for example, a new candidate beam RS set ID).

Association between the TRP identification information and the information regarding another TRP may be configured explicitly or implicitly.

The implicit association may be made based on an index/ID number. For example, the same value (index/ID) may be configured for the same TRP. As an example, given TRP-related information (for example, a given ID = 0) may be associated with a control resource set pool index = 0, a BFD RS set ID = 0, or a new candidate beam RS set ID = 0.

In the explicit association, the TRP identification information and the information regarding another TRP may be configured by higher layer signaling or the like.

In a case of the multi-DCI-based multi-TRPs, the TRP identification information (for example, a new ID) may be newly configured, or the control resource set pool index may be configured.

Based on the association between the TRP identification information and the PUCCH space-related information/information regarding another TRP, the UE can determine the association between the PUCCH and the TRP. In addition, the UE may control a UE operation (for example, the spatial domain filter, QCL assumption, transmit power, and the like used for PUCCH transmission) for the PUCCH in the corresponding TRP based on the association with the PUCCH space-related information/information regarding another TRP.

### (Second Aspect)

In a second aspect, a case where, when one or more TRPs are used, a UE operation (for example, PUCCH transmission) in each TRP is controlled based on a given ID associated with a PUCCH resource will be described.

In the present specification, the PUCCH resource may be replaced with a path loss reference signal for the PUCCH resource (for example, a PL-RS for the PUCCH resource) or a power control parameter for the PUCCH resource (for example, a power control parameter for the PUCCH resource).

The network (for example, the base station) may report/configure the TRP identification information to the UE. For example, the base station may notify the UE of the TRP identification information by using higher layer signaling (or a higher layer parameter)/DCI.

The TRP identification information may be configured/defined in association with (or corresponding to) the PUCCH resource. When a plurality of PUCCH resources are configured for the UE, each PUCCH resource may be associated with given TRP identification information.

When the plurality of PUCCH resources are configured for the UE by higher layer parameters, the TRP identification information may be configured for each PUCCH resource (for example, each PUCCH resource ID).

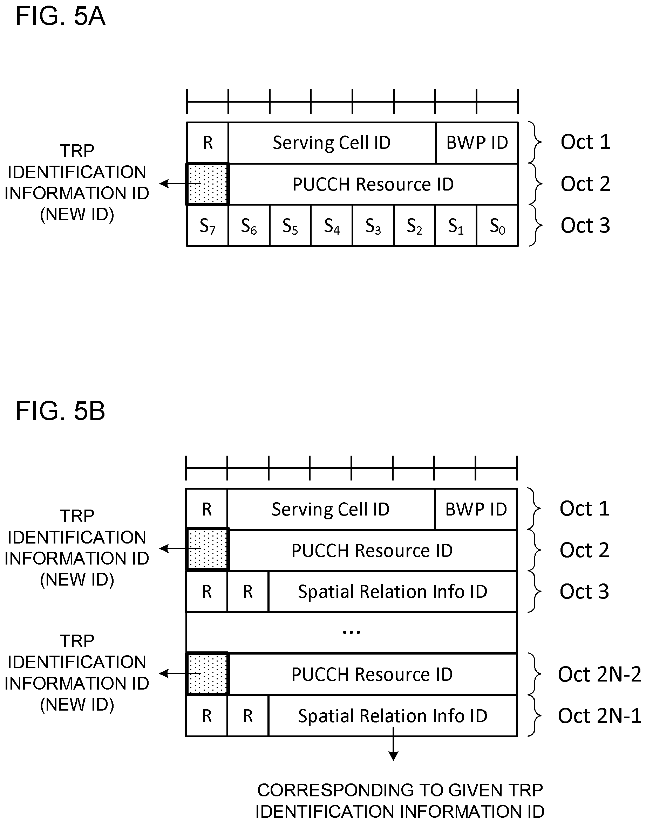

When more than a given number (for example, eight) of PUCCH resources are configured for the UE, the base station may activate a given number or less of PUCCH resources by using the MAC CE. As described above, when the spatial relation (or the TCI state) with respect to the PUCCH resource is activated using the MAC CE, the TRP identification information may be included in the MAC CE (for example, the PUCCH spatial relation activation/deactivation MAC CE) (see Figs. 5A and 5B).

The MAC CE illustrated in Fig. 5A may include information such as an application target serving cell ID ("Serving Cell ID" field), a BWP ID ("BWP ID" field), a PUCCH resource ID ("PUCCH Resource ID" field), and a TRP identification information ID (new ID).

Furthermore, the MAC CE includes a field of "Sᵢ" (i = 0 to 7). When a given field of Sᵢ indicates 1, the UE activates SRI of a spatial relation information ID (hereinafter, also referred to as an SRI ID) #i+1. When a given field of Sᵢ indicates 0, the UE may deactivate the SRI of the SRI ID #i+1. For a given PUCCH resource, only one PUCCH SRI can be activated.

The field of "R" illustrated in Fig. 5A may mean a reserved bit for future extension.

Fig. 5B is different from Fig. 5A in that a plurality of PUCCH resource IDs can be included and that one or a plurality of spatial relation information ("Spatial Relation Info ID" field) indicating SRI IDs can be included. The SRI ID field may be simply referred to as an SRI field.

For example, the MAC CE illustrated in Figs. 5A and 5B may use a given reserved bit (R bit) as a TRP identification information (or new ID) bit in the PUCCH spatial relation activation/deactivation MAC CE of the existing system (for example, Rel. 15/Rel. 16).

The UE can determine a PUCCH resource to be activated and a TRP corresponding to the PUCCH resource based on the MAC CE. Further, as illustrated in Figs. 5A and 5B, when the MAC CE includes the PUCCH space-related information, the association between the PUCCH space-related information and the TRP identification information can be configured/reported.

The TRP identification information (or new ID) may be configured to be associated with the information regarding another TRP as described in the first aspect. As the information regarding another TRP or the association between the TRP identification information and the information regarding another TRP, any one in the first aspect may be applied.

Based on the association between the TRP identification information and the PUCCH resource/information regarding another TRP, the UE can determine the association between the PUCCH and the TRP. The UE may also control a UE operation for the PUCCH in the corresponding TRP based on the association with the PUCCH resource/information regarding another TRP.

### (Variations)

In the single DCI-based multi-TRPs (S-DCI based M-TRPs) and the multi-DCI-based multi-TRPs (M-DCI based M-TRPs), a UE operation (for example, a UE operation after the base station response (for example, PUCCH transmission)) in the BFR procedure may be controlled differently.

### <BFR Procedure in Single-DCI-Based Multi-TRPs>

In a case of the single DCI-based multi-TRPs, spatial relations/TPC parameters of all PUCCH resources may be updated regardless of the TRP (option 1). For example, for the single-DCI-based multi-TRPs, the BFR procedure in Rel. 15/Rel. 16 may be applied.

A case where the PUCCH is performed for one TRP in the single-DCI-based multi-TRPs is also conceivable. For example, in a case of jointly transmitting HARQ-ACK for each TRP (in a case of applying joint HARQ-ACK transmission), the UE transmits the PUCCH for one TRP. In such a case, the BFR procedure in Rel. 15/Rel. 16 may be applied without applying the UE operations of the first aspect and the second aspect. That is, the UE operations of the first aspect and the second aspect may be applied only to the multi-DCI based multi-TRPs.

Alternatively, in a case of the single-DCI-based multi-TRPs, the spatial relations/TPC parameters of all the PUCCH resources may be updated in a specific TRP (for example, the first TRP or the second TRP) (option 2). The specific TRP may be determined based on the association between the PUCCH and the TRP. In this case, the UE operations of the first aspect and the second aspect may be applied.

### <BFR Procedure in Multi-DCI-Based Multi-TRPs>

In a case of the multi-DCI-based multi-TRPs, a spatial relation/TPC parameter of a PUCCH resource corresponding to each TRP may be updated based on the association between the PUCCH resource/PUCCH spatial relation and the TRP identification information (for example, TRP-ID/group ID/new ID). In this case, the UE operations of the first aspect and the second aspect may be applied.

### (UE Capability Information)

A UE capability corresponding to at least one function (feature) in the first aspect/second aspect may be defined. When the UE has reported the UE capability, the UE may perform the corresponding function. When the UE has reported the UE capability and is configured with a higher layer parameter corresponding to this function, the UE may perform the corresponding function. The higher layer parameter (RRC information element) corresponding to this function may be defined. When the higher layer parameter is configured, the UE may perform the corresponding function.

The UE capability may indicate whether or not the association between the PUCCH spatial relation information and the TRP identification information (or new ID) is supported.

The UE capability may indicate whether or not the association between the PUCCH resource and the TRP identification information (or new ID) is supported.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

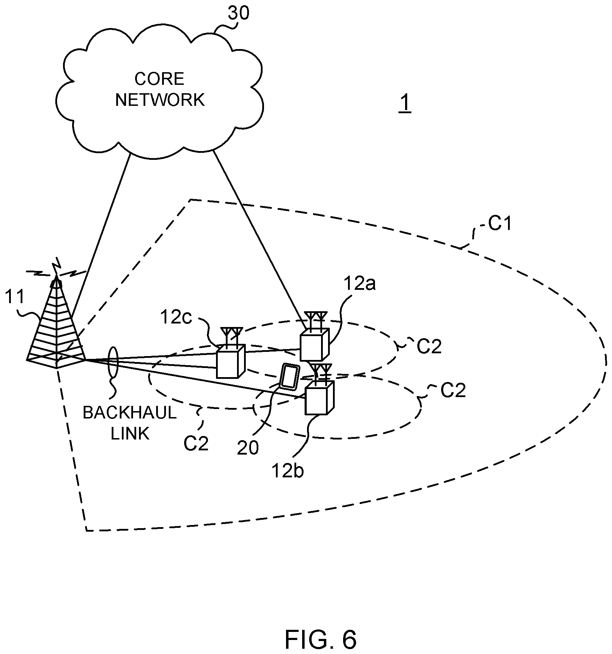

Fig. 6 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication in each CC using at least one of time division duplex (TDD) and frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), a next generation core (NGC), and the like.

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multicarrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

Further, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be read as interchangeable with DL data, and the PUSCH may be read as interchangeable with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. UE may monitor CORESET associated with a given search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be read as interchangeable with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

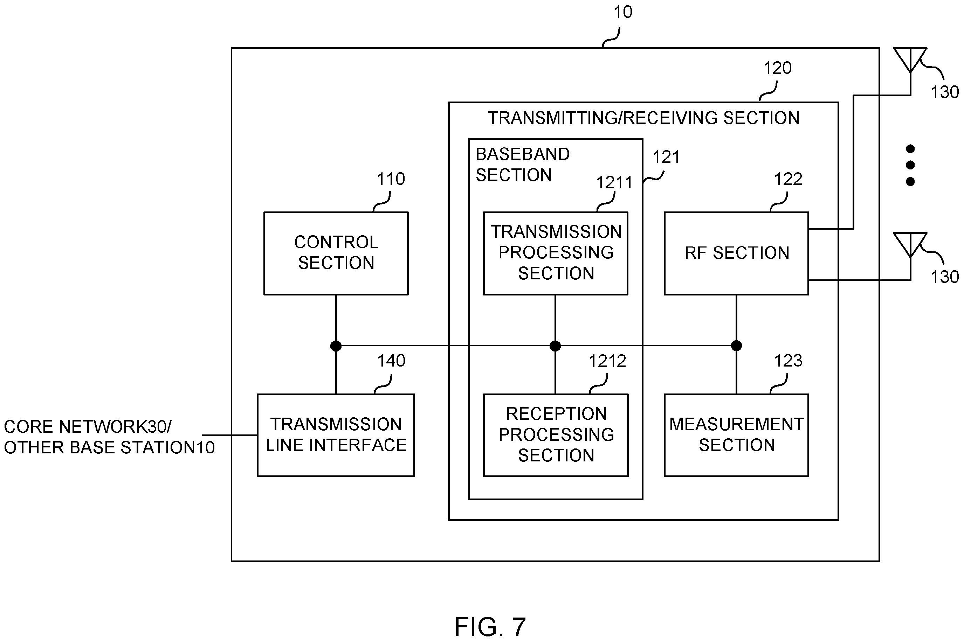

Fig. 7 is a diagram illustrating an example of a configuration of the base station according to one embodiment. The base station 10 includes a control section 110, a transmitting/receiving section 120, a transmitting/receiving antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmission section/reception section, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be constituted as an integrated transmitting/receiving section, or may be constituted by a transmission section and a reception section. The transmitting section may include the transmission processing section 1211 and the RF section 122. The reception section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmission section and the reception section of the base station 10 in the present disclosure may include at least one of the transmitting/receiving section 120, the transmission/reception antenna 130, and the transmission line interface 140.

The transmitting/receiving section 120 may transmit identification information (for example, a new ID) related to a transmission/reception point associated with at least one of spatial relation information of an uplink control channel or an uplink control channel resource.

The control section 110 may control reception of the uplink control channel transmitted based on the identification information when a spatial relation is configured or activated for the uplink control channel resource.

### (User Terminal)

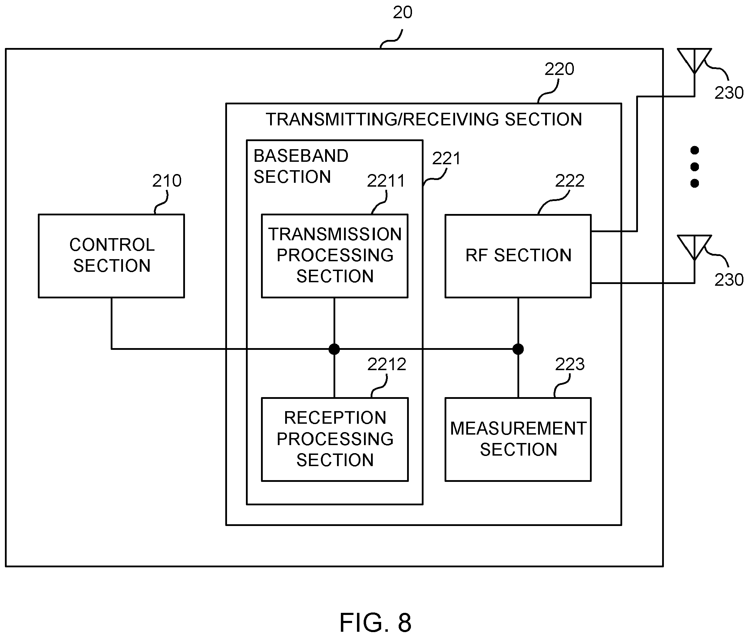

Fig. 8 is a diagram illustrating an example of a configuration of the user terminal according to one embodiment. The user terminal 20 includes a control section 210, a transmitting/receiving section 220, and a transmitting/receiving antenna 230. Note that, one or more each of the control sections 210, the transmitting/receiving sections 220, and the transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may transfer the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that, whether or not to apply DFT processing may be determined based on configuration of transform precoding. When the transform precoding is enabled for a channel (for example, PUSCH), the transmitting/receiving section 220 (transmission processing section 2211) may perform DFT processing as the transmission processing to transmit the channel by using a DFT-s-OFDM waveform, and when not, DFT processing does not have to be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220 or the transmitting/receiving antenna 230.

The transmitting/receiving section 220 may receive identification information (or a new ID) related to a transmission/reception point associated with at least one of spatial relation information of an uplink control channel or an uplink control channel resource.

The control section 210 may control transmission of the uplink control channel based on the identification information when a spatial relation is configured or activated for the uplink control channel resource.

The identifier information may be associated with at least one of a control resource set index, a control resource set pool index, a reference signal index for beam failure detection, an index of a reference signal set for beam failure detection, a reference signal index corresponding to a new candidate beam, or a reference signal set index corresponding to the new candidate beam.

The identification information may be included in an MAC CE used for notification of at least one of activation or deactivation of a spatial relation of an uplink control channel with respect to a given uplink control channel resource.

When an uplink control channel in each transmission/reception point is scheduled using a plurality of downlink control information, the control section 210 may control a transmission condition of the uplink control channel for each transmission/reception point based on identification information associated with an uplink control channel resource designated by the downlink control information.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be realized by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

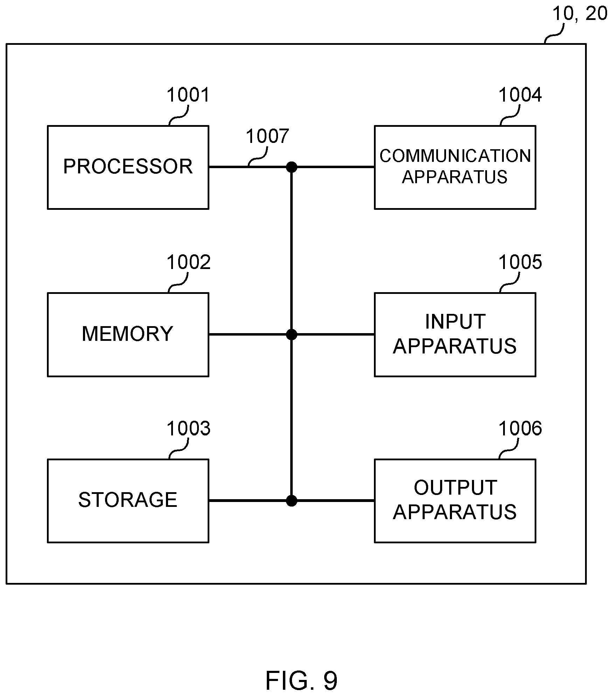

For example, the base station, the user terminal, and the like according to one embodiment of the present disclosure may function as a computer that executes the processing of the radio communication method of the present disclosure. Fig. 9 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

In addition, the processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as secondary storage apparatus.

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

In addition, these pieces of apparatus, including the processor 1001, the memory 1002 and so on are connected by the bus 1007 so as to communicate information. The bus 1007 may be formed with a single bus, or may be formed with buses that vary between pieces of apparatus.

In addition, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Modifications)

Note that terms described in the present disclosure and terms necessary for understanding the present disclosure may be replaced with terms that have the same or similar meanings. For example, a channel, a symbol, and a signal (signal or signaling) may be replaced with one another. Further, the signal may be a message. The reference signal can be abbreviated as an RS, and may be referred to as a pilot, a pilot signal, and the like, depending on which standard applies. In addition, a component carrier (CC) may be referred to as a cell, a frequency carrier, a carrier frequency, and the like.

A radio frame may be comprised of one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). In addition, a slot may be a time unit based on numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a minislot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and so on, instead of a "subframe."

Here, a TTI refers to the minimum time unit of scheduling in radio communication, for example. For example, in the LTE system, a base station performs scheduling to allocate radio resources (a frequency bandwidth, transmit power, and the like that can be used in each user terminal) to each user terminal in TTI units. Note that the definition of TTIs is not limited to this.

The TTI may be a transmission time unit of a channel-coded data packet (transport block), a code block, a codeword, etc. or may be a processing unit of scheduling, link adaptation, etc. Note that when the TTI is given, a time interval (e.g., the number of symbols) to which a transport block, a code block, a codeword, or the like is actually mapped may be shorter than the TTI.

Note that, when one slot or one minislot is referred to as a "TTI," one or more TTIs (that is, one or multiple slots or one or more minislots) may be the minimum time unit of scheduling. In addition, the number of slots (the number of minislots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more consecutive subcarriers in the frequency domain. The number of subcarriers included in the RB may be the same regardless of the numerology, and may be twelve, for example. The number of subcarriers included in an RB may be determined based on a numerology.

In addition, an RB may include one or more symbols in the time domain, and may be one slot, one minislot, one subframe or one TTI in length. One TTI, one subframe, etc. may each be comprised of one or more resource blocks.

Note that one or more RBs may be referred to as a physical resource block (PRB), a subcarrier group (SCG), a resource element group (REG), a PRB pair, an RB pair, and the like.

In addition, a resource block may include one or more resource elements (REs). For example, one RE may be a radio resource field of one subcarrier and one symbol.

A bandwidth part (BWP) (which may be referred to as a partial bandwidth or the like) may represent a subset of consecutive common resource blocks (RBs) for a given numerology in a given carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a given signal/channel outside the active BWP. Note that "cell", "carrier", etc. in the present disclosure may be replaced with "BWP".

Note that the structures of radio frames, subframes, slots, minislots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

In addition, the information, parameters, etc. described in the present disclosure may be represented using absolute values, or may be represented using relative values with respect to given values, or may be represented using other corresponding information. For example, a radio resource may be specified by a given index.

The names used for parameters etc. in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

In addition, information, signals, etc. can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The input/output information, signals, and the like can be overwritten, updated, or appended. The output information, signals, and the like may be deleted. The information, signals and so on that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Also, MAC signaling may be reported using, for example, a media access control-control element (MAC CE).

In addition, reporting of given information (for example, reporting of information to the effect that "X holds") does not necessarily have to be sent explicitly, and can be sent implicitly (for example, by not reporting this information, by reporting another information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

In addition, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "reference signal (RS port group)", "layer", "number of layers", "rank", "resource", "resource set", "resource group", "beam", "beam width", "beam angle", "antenna", "antenna element", "panel", and "transmission/reception point" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. When the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a wireless communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel, a downlink channel, and the like may be replaced with a side channel.

Similarly, the user terminal in the present disclosure may be replaced with the base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. In addition, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

In addition, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, "determining" may be replaced with "assuming", "expecting", "considering", or the like.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Note that the phrase may mean that "A and B are different from C". The terms such as "leave" and "coupled" may be interpreted in a manner similar to the term "different".

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a receiving section that receives identification information related to a transmission/reception point associated with at least one of spatial relation information of an uplink control channel or an uplink control channel resource; and
a control section that controls transmission of the uplink control channel based on the identification information when a spatial relation is configured or activated for the uplink control channel resource.

2. The terminal according to claim 1, wherein the identifier information is associated with at least one of a control resource set pool index, an index of a reference signal set for beam failure detection, or a reference signal set index corresponding to a new candidate beam.

3. The terminal according to claim 1 or 2, wherein the identification information is included in a media access control-control element (MAC CE) used for notification of at least one of activation or deactivation of a spatial relation of an uplink control channel with respect to a given uplink control channel resource.

4. The terminal according to any one of claims 1 to 3, wherein when an uplink control channel in each transmission/reception point is scheduled using a plurality of downlink control information, the control section controls a transmission condition of the uplink control channel for each transmission/reception point based on identification information associated with an uplink control channel resource designated by the downlink control information.

5. A radio communication method of a terminal, the radio communication method comprising:
receiving identification information related to a transmission/reception point associated with at least one of spatial relation information of an uplink control channel or an uplink control channel resource; and
controlling transmission of the uplink control channel based on the identification information when a spatial relation is configured or activated for the uplink control channel resource.

6. A base station comprising:
a transmitting section that transmits identification information related to a transmission/reception point associated with at least one of spatial relation information of an uplink control channel or an uplink control channel resource; and
a control section that controls reception of the uplink control channel transmitted based on the identification information when a spatial relation is configured or activated for the uplink control channel resource.
